# EUROPÄISCHE PATENTSCHRIFT

(11) **EP 3 202 022 B1**
(45) Veröffentlichungstag und Bekanntmachung des Hinweises auf die Patenterteilung: **20.04.2022**
(21) Anmeldenummer: 15808425.1
(22) Anmeldetag: 14.12.2015
(51) Int. Cl.: H02K 55/04, H02K 3/24, H02K 9/20

(54) **KÜHLVORRICHTUNG ZUR KÜHLUNG EINES HOCHPOLIGEN ROTORS**
COOLING DEVICE FOR COOLING A HIGH-POLE-COUNT ROTOR
DISPOSITIF DE REFROIDISSEMENT POUR REFROIDIR UN ROTOR À NOMBRE ÉLEVÉ DE PÔLES

(30) Priorität: 30.01.2015 DE 102015201610
(43) Veröffentlichungstag der Anmeldung: 09.08.2017
(73) Patentinhaber: Siemens Aktiengesellschaft, 80333 München (DE); Voith Patent GmbH, 89522 Heidenheim (DE)
(72) Erfinder: DENNERLEIN, Klaus, 91058 Erlangen (DE); FRANK, Michael, 91080 Uttenreuth (DE); GRUNDMANN, Jörn, 91091 Großenseebach (DE); KUHNERT, Anne, 90768 Fürth (DE); KUMMETH, Peter, 91074 Herzogenaurach (DE); VAN HASSELT, Peter, 91058 Erlangen (DE)
(86) Internationale Anmeldenummer: PCT/EP2015/079601
(87) Internationale Veröffentlichungsnummer: WO 2016/119968

(56) Entgegenhaltungen:
- EP-A2- 0 040 734
- DE-A1- 3 229 928
- US-A1- 2013 225 415

## Beschreibung

Die Erfindung betrifft einen Rotor einer elektrischen Maschine mit einer Kühlvorrichtung zur Kühlung des um eine Rotationsachse drehbar gelagerten Rotors, wobei der Rotor von einer zentralen Rotorwelle getragen wird und einen Hohlraum im Inneren der Rotorwelle zur Aufnahme von Kühlmittel umfasst.

Aus dem Stand der Technik sind elektrische Maschinen bekannt, die mit Kühlvorrichtungen zur Kühlung von rotierenden elektrischen Spulenwicklungen ausgestattet sind. Insbesondere Maschinen mit supraleitenden Rotorwicklungen werden typischerweise mit Kühlvorrichtungen ausgestattet, bei denen ein Kühlmittel wie flüssiger Stickstoff, flüssiges Helium oder flüssiges Neon im Inneren einer zentralen Rotorwelle nach dem Thermosiphonprinzip zirkuliert und hierdurch Wärme aus dem Rotor abführen kann. Mit solchen Kühlsystemen können supraleitende Spulenwicklungen, insbesondere supraleitende rotierende Erregerwicklungen auf eine Betriebstemperatur unterhalb der Sprungtemperatur des Supraleiters gekühlt werden und auf dieser Betriebstemperatur gehalten werden.

Bei solchen bekannten Kühlvorrichtungen wird oft ein Endbereich der Rotorwelle verwendet, um von einer feststehenden Kälteanlage verflüssigtes Kühlmittel in einen Innenraum der Rotorwelle einzuspeisen, beispielsweise über ein in die Rotorwelle hineinragendes feststehendes Kühlmittelrohr. Von dem Innenraum der Rotorwelle aus kann das Kühlmittel über separate radiale Leitungen zu den radial weiter außenliegenden Positionen der Spulenwicklungen gelangen. Eine derartige Kühlvorrichtung ist beispielsweise aus der EP 2 603 968 A1 bekannt.

Diese bekannten Kühlvorrichtungen eignen sich bevorzugt zur Kühlung von elektrischen Maschinen, die nur eine geringe Anzahl von Spulenwicklungen aufweisen. Bei hochpoligen Maschinen mit einer hohen Anzahl an Spulenwicklungen würde dagegen die Verwendung einer eigenen radialen Kühlmittelleitung für jede Spulenwicklung zu einem sehr hohen apparativen Aufwand führen. Aus diesem Grund wurde für hochpolige Maschinen, wie sie beispielsweise bei Windkraft- oder Wasserkraft-Generatoren im Einsatz sind, ein alternatives Kühlkonzept vorgeschlagen. Eine solche alternative Kühlvorrichtung ist in der EP 2 521 252 A1 beschrieben. Hier weist die Kühlvorrichtung eine Mehrzahl von zusammen mit dem Rotor rotierenden Kaltköpfen auf. Die von den Spulenwicklungen abzutransportierende Wärme wird durch Wärmeleitung in massiven, mit den Kaltköpfen thermisch verbundenen Kupferelementen abgeführt. Hierdurch wird die Einspeisung von Kühlmittel in die Rotorwelle und die Verteilung des Kühlmittels in radial außenliegende Positionen vollständig vermieden. Ein Nachteil bei diesem Kühlkonzept ist jedoch, dass die empfindlichen und schweren Kaltköpfe für hohe Drehgeschwindigkeiten ausgelegt werden müssen. Ein weiterer Nachteil ist, dass durch die massiven Kupferelemente zur Entwärmung der Spulen eine relativ hohe zusätzliche mitrotierende Masse vorliegt.

Aus der US 2013/0225415 A1 ist außerdem eine elektrische Maschine mit einer supraleitenden Rotorwicklung bekannt, bei der die supraleitenden Drähte im Inneren von axialen Kühlrohren geführt sind, welche über den Umfang des Rotors verteilt sind. Diese Kühlrohre sind mit ringförmigen Verteiler- bzw. Sammelleitungen verbunden, welche an gegenüberliegenden axialen Enden des Rotors auf demselben Radius angeordnet sind.

Auch die EP 0040734 A2 beschreibt eine Kühlvorrichtung für einen Rotor mit einer supraleitenden Erregerwicklung, bei der in den axialen Endbereichen ringförmige Verteilerleitungen für ein kryogenes Kühlmittel vorgesehen sind. Die Kühlung beruht hier auf einem Thermosiphon-Kreislauf, der sich in diesen Verteilerleitungen schließt, so dass jede der ringförmigen Verteilerleitungen sowohl die Funktion einer Zuführleitung als auch einer Rückleitung für das Kühlmittel erfüllt.

Auch die DE 3229928 A1 beschreibt eine Kühleinrichtung für eine supraleitende Erregerwicklung im Läufer einer elektrischen Maschine mit einem mitrotierenden Kühlmittelvorratsraum. Hier weist die Kühleinrichtung ein am Außenumfang der Wicklung angeordnetes Kühlmittelverteilersystem auf sowie eine radiale Kühlmitteleinspeisungsleitung und einen Wärmetauscher zwischen dem Kühlmittelvorratsraum und dem Kühlmittelverteilersystem.

Aufgabe der vorliegenden Erfindung ist es, einen Rotor einer elektrischen Maschine mit einer Kühlvorrichtung zur Kühlung des um eine Rotationsachse drehbar gelagerten Rotors anzugeben, welche die genannten Nachteile vermeidet. Insbesondere soll die Kühlvorrichtung so ausgebildet werden, dass die Anordnung mitrotierender Kaltköpfe auf dem Rotor vermieden wird. Weiterhin soll die Kühlvorrichtung ein relativ geringes Gewicht aufweisen und eine möglichst niedrige Anzahl an radialen Kühlmittelleitungen aufweisen. Die Kühlvorrichtung soll insbesondere zur Verwendung in Rotoren von hochpoligen elektrischen Maschinen geeignet sein.

Diese Aufgabe wird mit einem Rotor mit den Merkmalen des Anspruchs 1 gelöst. Vorteilhafte Ausgestaltungen des Rotors sind in den abhängigen Ansprüchen 2 bis 10 definiert.

Eine weitere Aufgabe der Erfindung ist es, eine elektrische Maschine mit einem solchen Rotor anzugeben. Diese Aufgabe wird durch eine elektrische Maschine mit den Merkmalen des Anspruchs 11 gelöst.

Der erfindungsgemäße Rotor einer elektrischen Maschine weist eine Kühlvorrichtung zur Kühlung des um eine Rotationsachse drehbar gelagerten Rotors auf, wobei der Rotor von einer zentralen Rotorwelle getragen wird und einen Hohlraum im Inneren der Rotorwelle zur Aufnahme von Kühlmittel aufweist. Mit der Kühlvorrichtung ist ein geschlossener Kühlkreislauf gebildet. Die Kühlvorrichtung umfasst wenigstens eine sich von dem Hohlraum radial nach außen erstreckende erste Kühlmittelleitung und eine über diese erste Kühlmittelleitung mit dem Hohlraum verbundene ringförmige erste Verteilerleitung.Weiterhin weist die Kühlvorrichtung wenigstens eine sich von dem Hohlraum radial nach außen erstreckende zweite Kühlmittelleitung und eine über diese zweite Kühlmittelleitung mit dem Hohlraum fluidisch verbundene ringförmige zweite Verteilerleitung auf.Der Rotor weist eine Mehrzahl elektrischer Spulen auf verschiedenen azimutalen Positionen auf. Hierbei ist jede der Spulen thermisch mit einem Spulenkühlrohr gekoppelt, welches jeweils über einen Auslass mit der ersten ringförmigen Verteilerleitung fluidisch verbunden ist und jeweils über einen Einlass mit der zweiten ringförmigen Verteilerleitung fluidisch gekoppelt ist. Erfindungsgemäß sind die erste und die zweite ringförmige Verteilerleitung mit voneinander unterschiedlichen radialen Abständen jeweils konzentrisch um die Rotationsachse angeordnet.

Ein wesentlicher Vorteil des erfindungsgemäßen Rotors ist, dass durch die ringförmige Verteilerleitung eine Möglichkeit geschaffen wird, auch Rotoren mit einer hohen Anzahl elektrischer Spulen auf einfache Weise effizient zu kühlen. Das Leitungssystem aus dem Hohlraum der Rotorwelle, der radialen Kühlmittelleitung und der ringförmigen Verteilerleitung ermöglicht die Zirkulation eines flüssigen oder gasförmigen Kühlmittels hin zu den Bereichen des Rotors, die gekühlt werden sollen. Durch die Verwendung einer ringförmigen Verteilerleitung für das Kühlmittel wird die Notwendigkeit einzelner radialer Kühlmittelzuführungen für jede Spulenwicklung vorteilhaft vermieden. Im Vergleich zu Rotoren herkömmlicher hochpoliger Maschinen mit massiven Kupferelementen kann das Gewicht der Kühlvorrichtung durch den Einsatz von flüssigem oder gasförmigem Kühlmittel reduziert werden.

Das Kühlmittel kann beispielsweise in einem axial weiter entfernt liegenden Bereich in die Rotorwelle eingespeist werden. Das Kühlmittel kann dabei in einem geschlossenen Kreislauf zirkulieren, wobei im Rotor verdampftes Kühlmittel an einem außerhalb des Rotors stationär angeordneten Kaltkopf wieder kondensiert werden kann. Da somit keine mitrotierenden Kaltköpfe benötigt werden, kann der Aufbau gegenüber bekannten hochpoligen Rotoren vereinfacht werden und die Lebensdauer sowie die Wartungsintervalle der Kaltköpfe können erhöht werden.

Die Verteilung des Kühlmittels über eine ringförmige Verteilerleitung erlaubt eine gleichmäßige Kühlung von auf dem Rotor angeordneten elektrischen Spulen auch bei einer hohen Spulenanzahl. Komplexität, Gewicht und Materialaufwand können im Vergleich zu einer Ausführungsform mit separaten radialen Kühlmittelleitungen für jede Spule deutlich reduziert werden.

Die erste ringförmige Verteilerleitung kann für den Hintransport von Kühlmittel zu den elektrischen Spulen ausgebildet sein und die zweite ringförmige Verteilerleitung kann für den Rücktransport des Kühlmittels in den Hohlraum der Rotorwelle ausgebildet sein. Die erste radiale Kühlmittelleitung dient dann zur Einspeisung des Kühlmittels in die erste Verteilerleitung, und die zweite radiale Kühlmittelleitung dient zum Rücktransport des Kühlmittels von der zweiten Verteilerleitung in den Hohlraum der Rotorwelle.Bei dieser Ausführung mit zwei getrennten ringförmigen Verteilerleitungen für die beiden Flussrichtungen wird also auf einfache Weise ein geschlossener Kühlmittelkreislauf über die zu kühlenden Bereiche der Spulen hinweg erreicht.

Über die Spulenkühlrohre kann das Kühlmittel über die ringförmige Verteilerleitung zu den verschiedenen azimutalen Positionen der einzelnen Spulen transportiert werden, wobei es anschließend in axialer Richtung durch die von der Verteilerleitung abzweigenden Spulenkühlrohre in die Bereiche der Spulenwicklungen gelangt. Die Spulenkühlrohre können also an verschiedenen azimutalen Positionen von der Verteilerleitung abzweigen und das Kühlmittel beispielsweise in axialer Richtung in die zu entwärmenden Bereiche transportieren. Die thermische Kopplung des in den Spulenkühlrohren enthaltenen Kühlmittels mit den elektrischen Spulen kann dabei auf unterschiedliche Weise erfolgen.Beispielsweise können die Wicklungen der elektrischen Spulen mechanisch direkt mit den Außenseiten der Spulenkühlrohre verbunden sein. Alternativ oder zusätzlich können die Spulenwicklungen durch thermisch leitende Kupferstücke mit den Spulenkühlrohren verbunden sein. Eine weitere mögliche Alternative ist die Einbettung der Spulenkühlrohre in einen Wicklungsträger der Spulenwicklungen. Hierbei kann der Wicklungsträger vorteilhaft aus thermisch gut leitendem Material gebildet sein.

Dadurch, dass erste und die zweite ringförmige Verteilerleitung mit voneinander unterschiedlichen radialen Abständen jeweils konzentrisch um die Rotationsachse angeordnet sind, wird besonders vorteilhaft eine geometrische Trennung der beiden ringförmigen Verteilerleitungen erreicht, wodurch die Führung der von den Ringleitungen abzweigenden Spulenkühlrohre der einzelnen Spulen vereinfacht werden kann. Besonders vorteilhaft ist die erste ringförmige Verteilerleitung für eine Einspeisung des Kühlmittels in die zu kühlenden Bereiche ausgebildet und auf einer radial weiter außenliegenden Position angeordnet als die für den Rücktransport des Kühlmittels vorgesehene zweite ringförmige Verteilerleitung.

Auf diese Weise können die bei der Rotation gebildeten Zentrifugalkräfte genutzt werden, um eine Verteilung des Kühlmittels in Richtung des Kühlkreislaufs zu fördern. Zusätzlich können die beiden ringförmigen Verteilerleitungen optional auch axial gegeneinander versetzt sein.

Vorteilhafte Ausgestaltungen und Weiterbildungen der Erfindung gehen aus den von Anspruch 1 abhängigen Ansprüchen hervor. Dabei können die Merkmale der Kühlvorrichtung vorteilhaft mit den Merkmalen des Rotors und der elektrischen Maschine kombiniert werden.

Die ringförmige erste Verteilerleitung kann als geschlossene Ringleitung konzentrisch um die Rotationsachse angeordnet sein. Bei dieser Ausführungsform wird auf einfache Weise ein Transport des Kühlmittels hin zu allen azimutalen Positionen des Rotors ermöglicht. Unter den verschiedenen azimutalen Positionen sollen hierbei die unterschiedlichen Winkelpositionen in Umlaufrichtung des Rotors verstanden werden. Die ringförmige erste Verteilerleitung kann hierzu insbesondere als kreisförmige Ringleitung ausgebildet sein.

Der Rohrquerschnitt der ersten Verteilerleitung kann größer ausgebildet sein als der Rohrquerschnitt der einzelnen Spulenkühlrohre. Hierdurch kann eine gleichmäßige Verteilung des Kühlmittels in der ringförmigen Verteilerleitung erreicht werden. Die an verschiedenen azimutalen Positionen abzweigenden Spulenkühlrohre können dann weitgehend gleichmäßig durchströmt werden, wodurch eine gleichmäßige Kühlung der nebeneinander angeordneten elektrischen Spulen erreicht werden kann. Beispielsweise kann die Rohrquerschnittsfläche der ersten Verteilerleitung vorteilhaft wenigstens doppelt so groß, insbesondere wenigstens viermal so groß sein wie die Rohrquerschnittsfläche der einzelnen Spulenkühlrohre. Bei Vorliegen einer zweiten Verteilerleitung und von einer oder mehreren zweiten radialen Kühlmittelleitungen gelten die beschriebenen vorteilhaften Verhältnisse der Rohrquerschnittsflächen analog.

Der Rohrquerschnitt der ersten Verteilerleitung kann ähnlich groß sein wie der Rohrquerschnitt der ersten radialen Kühlmittelleitung. Beispielsweise unterscheiden sich diese beiden Rohrquerschnitte um nicht mehr als 50% der größeren der beiden Querschnittsflächen.

Vorteilhaft kann jede Spule mit einem separaten Spulenkühlrohr mit der ersten ringförmigen Verteilerleitung thermisch verbunden sein. Hierdurch kann eine besonders gleichmäßige Kühlung der verschiedenen elektrischen Spulen erreicht werden, denn die zu kühlenden Bereiche der verschiedenen Spulen werden parallel von Kühlmittel durchströmt. Das Kühlmittel in den Bereichen der verschiedenen Spulen liegt somit auf einem relativ einheitlichen Temperaturniveau vor. Im Vergleich zu einer seriellen Durchströmung der Spulen mit Kühlmittel wird hierdurch eine gleichmäßige Temperatur beim Einsatz von geringeren Kühlmittelmengen erreicht.

Alternativ zu der vorgenannten Ausführungsform können die einzelnen Spulen zu Kühlgruppen zusammengefasst sein, wobei die Spulen jeder Kühlgruppe mit einem gemeinsamen Spulenkühlrohr thermisch gekoppelt sein können. Bei dieser Ausführungsform kann die insgesamt benötigte Anzahl von Kühlmittelrohren weiter reduziert werden. Auch die Anzahl der an der Ringleitung benötigten Abzweigungen ist reduziert, wodurch die Komplexität der Kühlvorrichtung reduziert ist. Die elektrischen Spulen des Rotors können beispielsweise in eine bestimmte Anzahl gleichgroßer Kühlmittelgruppen aufgeteilt sein. Beispielsweise können immer jeweils zwei, vier oder noch mehr elektrische Spulen zu einer Kühlmittelgruppe zusammengefasst sein. Bei einer relativ geringen Anzahl von beispielsweise zwei bis vier elektrischen Spulen pro Kühlmittelgruppe kann auf diese Weise trotzdem eine relativ gleichmäßige Temperaturverteilung der verschiedenen Spulen erreicht werden. Bei dieser Ausführungsform sind also jeweils zwei bis vier elektrische Spulen seriell von Kühlmittel durchströmt, während die jeweiligen Kühlmittelgruppen parallel zueinander von Kühlmittel durchströmt werden. Dies führt zu einem günstigen Kompromiss zwischen gleichmäßiger Temperaturverteilung und Komplexität der Kühlvorrichtung.

Die Kühlvorrichtung kann vorteilhaft eine Mehrzahl von ersten radialen Kühlmittelleitungen zwischen Hohlraum und erster Verteilerleitung aufweisen sowie weiterhin eine Mehrzahl von zweiten radialen Kühlmittelleitungen zwischen Hohlraum und zweiter Verteilerleitung. Auf diese Weise werden mehrere radiale Kühlmittelpfade zur Verfügung gestellt, um das Kühlmittel in beiden Flussrichtungen zu transportieren. Somit wird eine gleichmäßige Verteilung des Kühlmittels über die beiden ringförmigen Verteilerleitungen erleichtert, ohne dass jedoch eine übermäßig hohe Anzahl an radialen Leitungen benötigt wird.

Bei der beschriebenen Ausführungsform mit mehreren ersten und zweiten radialen Kühlmittelleitungen können jeweils diese ersten und/oder zweiten radialen Kühlmittelleitungen azimutal gleichmäßig angeordnet sein. Durch diese Ausführungsform wird eine besonders gleichmäßige Verteilung des Kühlmittels über die erste und/oder zweite Verteilerleitung erreicht. Weiterhin trägt eine solche Anordnung zu einer gleichmäßigen Auswuchtung des gesamten Rotors bei.

Vorteilhaft kann die Anzahl der ersten radialen Kühlmittelleitungen gleich der Anzahl der zweiten radialen Kühlmittelleitungen sein. Hierbei können in azimutaler Richtung jeweils erste und zweite radiale Kühlmittelleitungen abwechselnd um die Rotationsachse angeordnet sein. Durch diese Ausführungsform kann eine besonders gleichmäßige Temperaturverteilung über die verschiedenen elektrischen Spulen erreicht werden, da hierbei die auf den unterschiedlichen azimutalen Positionen insgesamt zurückgelegten Wege des Kühlmittels angeglichen werden. Mit anderen Worten wird für jede der elektrischen Spulen ein eigener paralleler Kühlmittelpfad gebildet, dessen Gesamtlänge über die radialen Kühlmittelleitungen, die beiden ringförmigen Verteilerleitungen und die Spulenkühlrohre insgesamt annähernd gleich sind. Die elektrischen Spulen, die eine kürzere Anbindung über die erste ringförmige Verteilerleitung aufweisen, haben gleichzeitig eine längere Anbindung über die zweite ringförmige Verteilerleitung und umgekehrt. Alternativ zu der vorab beschriebenen Ausführungsform können jeweils eine erste und eine zweite radiale Kühlmittelleitung paarweise parallel zueinander geführt werden. Beispielsweise können die beiden Leitungen eines solchen Paares axial leicht versetzt nebeneinander geführt werden. Sie können dabei zusammen thermisch gegen die äußere Umgebung isoliert sein, beispielsweise durch eine beide Leitungen gemeinsam umgebende Vakuumisolation und/oder Lagen von Superisolation. Alternativ können die erste und zweite radiale Kühlmittelleitung eines solchen Paares auch konzentrisch ineinander geführt werden. Beispielsweise kann die zweite radiale Kühlmittelleitung zur Rückführung von Kühlmittel in den Hohlraum die erste radiale Kühlmittelleitung zur Einspeisung von Kühlmittel in den Rotor konzentrisch umgeben. Durch eine solche Gegenstromanordnung kann die thermische Isolation des noch kalten Kühlmittels in der ersten radialen Kühlmittelleitung gegen die äußere Umgebung verbessert werden.

Bei dem Rotor kann vorteilhaft die Anzahl der Spulen wenigstens doppelt so groß sein wie die Anzahl der ersten radialen Kühlmittelleitungen. Im Vergleich zu einer separaten Ankopplung der einzelnen elektrischen Spulen wird somit die Anzahl der radialen Kühlmittelleitungen vorteilhaft reduziert. Besonders vorteilhaft kann das Verhältnis von der Anzahl der Spulen zur Anzahl der ersten radialen Kühlmittelleitungen noch wesentlich größer sein, insbesondere kann dieses Verhältnis wenigstens 4:1, besonders vorteilhaft sogar wenigstens 10:1 betragen. Bei den genannten Zahlenverhältnissen wird durch die wenigstens eine ringförmige Verteilerleitung eine besonders weitreichende Reduktion der Komplexität des Kühlsystems erreicht.

Besonders vorteilhaft weist der Rotor mit der Kühlvorrichtung eine hohe elektrische Polzahl auf. Beispielsweise kann die Anzahl der elektrischen Spulen allgemein bei wenigstens 20, besonders vorteilhaft bei wenigstens 40 liegen. Die Zahl der ersten und/oder zweiten radialen Kühlmittelleitungen kann dabei vorteilhaft jeweils zwischen 2 und 10 liegen, besonders vorteilhaft zwischen 3 und 6.

Das Kühlmittel der Kühlvorrichtung kann beispielsweise Stickstoff, Helium und/oder Neon umfassen. Mit den genannten Stoffen kann mit verschiedenen Druckbereichen ein relativ großer Bereich an kryogenen Betriebstemperaturen zugänglich gemacht werden.

Die verschiedenen Rohre der Kühlvorrichtung, also beispielsweise die radialen Kühlmittelleitungen, die ringförmigen Verbindungsleitungen und/oder die Spulenkühlrohre können entweder separat oder auch gemeinschaftlich thermisch gegen die äußere Umgebung isoliert sein. Dies kann beispielsweise durch eine umgebende Vakuumisolation und/oder durch eine oder mehrere Lagen von Superisolation erreicht werden.

Die elektrischen Spulen des Rotors können allgemein Spulen mit supraleitenden Spulenwicklungen, insbesondere mit hochtemperatursupraleitenden Spulenwicklungen sein.

Bei der elektrischen Maschine kann es sich beispielsweise um einen Generator oder um einen Motor handeln.

Nachfolgend wird die Erfindung anhand einiger bevorzugter Ausführungsbeispiele unter Bezugnahme auf die angehängten Zeichnungen beschrieben, in denen
- Figur 1: eine schematische perspektivische Darstellung eines Rotors mit einer Kühlvorrichtung nach einem ersten Ausführungsbeispiel zeigt,
- Figur 2: einen schematischen Längsschnitt eines Rotors nach einem zweiten Ausführungsbeispiel zeigt,
- Figur 3: einen schematischen Querschnitt im Bereich zweier Verbindungsleitungen eines Rotors nach einem dritten Ausführungsbeispiel zeigt und
- Figur 4: einen schematischen Querschnitt im Bereich zweier Verbindungsleitungen eines Rotors nach einem vierten Ausführungsbeispiel zeigt.

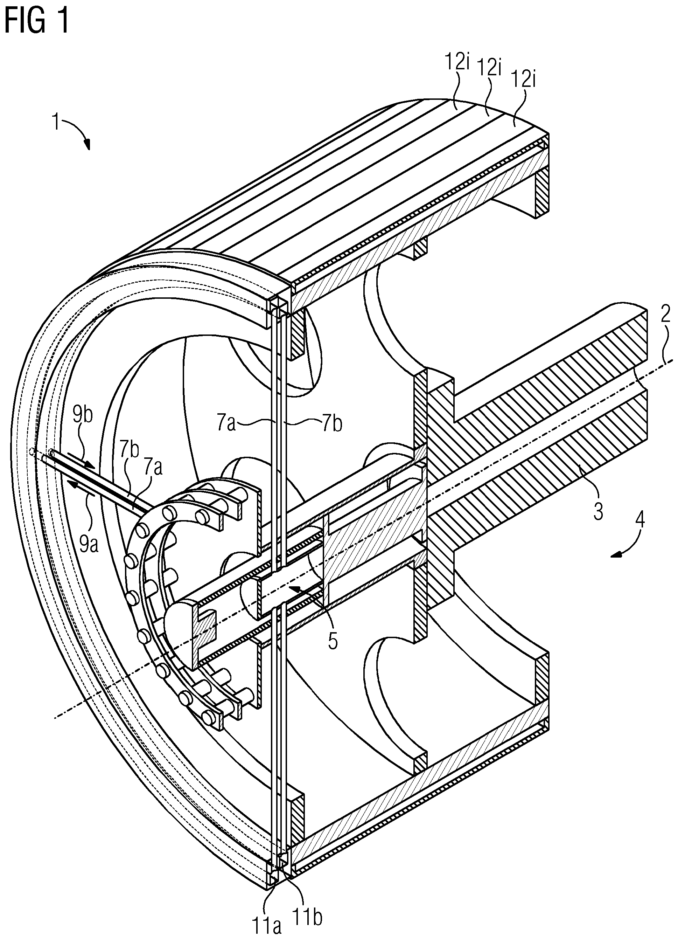

Figur 1 zeigt einen Rotor 1 einer elektrischen Maschine mit einer Kühlvorrichtung nach einem ersten Ausführungsbeispiel der Erfindung in schematischer perspektivischer Darstellung. Der Rotor 1 wird von einer Rotorwelle 3 getragen und rotiert zusammen mit dieser um eine zentrale Rotationsachse 2. Der Rotorkörper 4 ist also radial außenliegend um die Rotorwelle 3 angeordnet. Der Rotorkörper 4 weist eine Vielzahl elektrischer Spulen 12i auf, die in diesem Beispiel als supraleitende Spulenwicklungen ausgebildet sind. Es handelt sich hier um Wicklungen mit hochtemperatur-supraleitendem Material. Diese supraleitenden Wicklungen werden durch die Kühlvorrichtung auf eine Betriebstemperatur unterhalb ihrer Sprungtemperatur gekühlt. Zur Aufrechterhaltung dieser Betriebstemperatur ist ein ständiger Abtransport von Wärme aus dem Bereich der Spulen 12i nötig. Im gezeigten Beispiel handelt es sich um den Rotor einer elektrischen Maschine mit einer hohen Polzahl. Ein solcher hochpoliger Rotor kann beispielsweise in einem Generator für die Erzeugung von Strom aus Windkraft oder Wasserkraft zum Einsatz kommen. Im gezeigten Beispiel weist der Rotor insgesamt 56 elektrische Spulen auf, die in azimutaler Richtung nebeneinander angeordnet sind. Sie sind innerhalb des Rotorkörpers 4 auf einem relativ hohen radialen Abstand zur Rotorwelle 3 angeordnet.

Die Kühlvorrichtung des Rotors 1 kühlt die elektrischen Spulen 12i mit Hilfe eines verflüssigten oder gasförmigen Kühlmittels 6. Im gezeigten Beispiel handelt es sich dabei um verflüssigtes Neon. Das Neon wird an einem axial weiter entfernt und außerhalb der Rotorwelle feststehend angeordneten Kaltkopf kondensiert und anschließend in einen Innenraum der Rotorwelle 3 eingespeist. Im gezeigten Bereich ist diese im Innenraum der Rotorwelle 3 zu einem Hohlraum 5 ausgeweitet, in dem also ein Reservoir des Kühlmittels 6 vorliegt. Insgesamt wird das Kühlmittel 6 zwischen diesem Reservoir 5 und dem nicht gezeigten feststehenden Kaltkopf in einem geschlossenen Kreislauf beispielsweise nach Art des Thermosiphon-Prinzips zirkuliert. Die Einspeisung des Kühlmittels 6 in die Rotorwelle 3 kann auf unterschiedliche Weise erfolgen, beispielsweise über ein frei zugängliches erstes Wellenende 3a. Alternativ kann das Kühlmittel jedoch auch in einem axial innenliegenden Bereich der Rotorwelle 3 radial in ein Inneres der Rotorwelle 3 eingespeist werden.

Ausgehend von dem Reservoir an verflüssigtem Kühlmittel 6 im inneren Hohlraum 5 wird das Kühlmittel über mehrere erste radiale Kühlmittelleitungen 7a radial nach außen transportiert. Über diese ersten radialen Kühlmittelleitungen 7a gelangt es in eine erste Verteilerleitung 11a. Diese erste Verteilerleitung 11a ist als ringförmig geschlossene Rohrleitung ausgebildet. Über diese Verteilerleitung kann das verflüssigte Kühlmittel 6 also in einem radial außenliegenden Bereich des Rotors 3 zu allen azimutalen Positionen gelangen. An diesen unterschiedlichen azimutalen Positionen ist die Verteilerleitung 11a mit einer Vielzahl von Auslässen 15i versehen, die der Übersichtlichkeit halber in Figur 1 nicht eingezeichnet sind. Über diese Auslässe 15i gelangt das verflüssigte Kühlmittel in den Bereich der zu entwärmenden elektrischen Spulen 12i, von wo es über hier ebenfalls nicht gezeigte Einlässe 17i zurück in eine zweite Verteilerleitung 11b gelangen kann. Diese zweite Verteilerleitung 11b ist ähnlich wie die erste Verteilerleitung 11a ebenfalls als ringförmig geschlossene Rohrleitung ausgebildet. Sie dient zum Sammeln des im Bereich der elektrischen Spulen 12i erwärmten und hier möglicherweise teilweise verdampften Kühlmittels 6. Aus dieser zweiten Verteilerleitung 11b gelangt das so erwärmte Kühlmittel über eine Mehrzahl von zweiten radialen Kühlmittelleitungen 7b zurück in den Hohlraum 5 innerhalb der Rotorwelle 3. Somit ist über das System aus zwei ringförmigen Verteilerleitungen und mehreren radialen Kühlmittelleitungen ein geschlossener Kreislauf zwischen dem inneren Hohlraum 5 und den zu entwärmenden Bereichen des Rotors gebildet. Im Beispiel der Figur 1 sind jeweils vier erste radiale Kühlmittelleitungen 7a und jeweils ebenfalls vier zweite radiale Kühlmittelleitungen 7b gezeigt. Diese sind jeweils paarweise zusammengebündelt, wobei jeweils eine erste und eine zweite radiale Kühlmittelleitung ein Paar bilden. Die resultierenden vier Rohrpaare sind in einer speichenartigen Konfiguration gleichmäßig um die Rotationsachse 2 herum angeordnet, so dass sich für diese Rohrleitung 7a und 7b eine insgesamt vierzählige Symmetrie ergibt. Die Anzahl der radialen Kühlmittelleitungen 7a und 7b ist hier deutlich geringer als die Anzahl der elektrischen Spulen. Im Vergleich zu einer Ankopplung der Spulen 12i mit einer jeweils eigenen Rohrleitung ist somit die Komplexität des Systems und die Anzahl der benötigten Leitungen deutlich reduziert. Durch die ringförmigen Verteilerleitungen 11a und 11b wird trotzdem eine relativ gleichmäßige Anströmung der Spulen 12i durch Kühlmittel 6 erreicht. Somit können die supraleitenden Spulen auf eine untereinander relativ ähnliche Betriebstemperatur gekühlt werden.

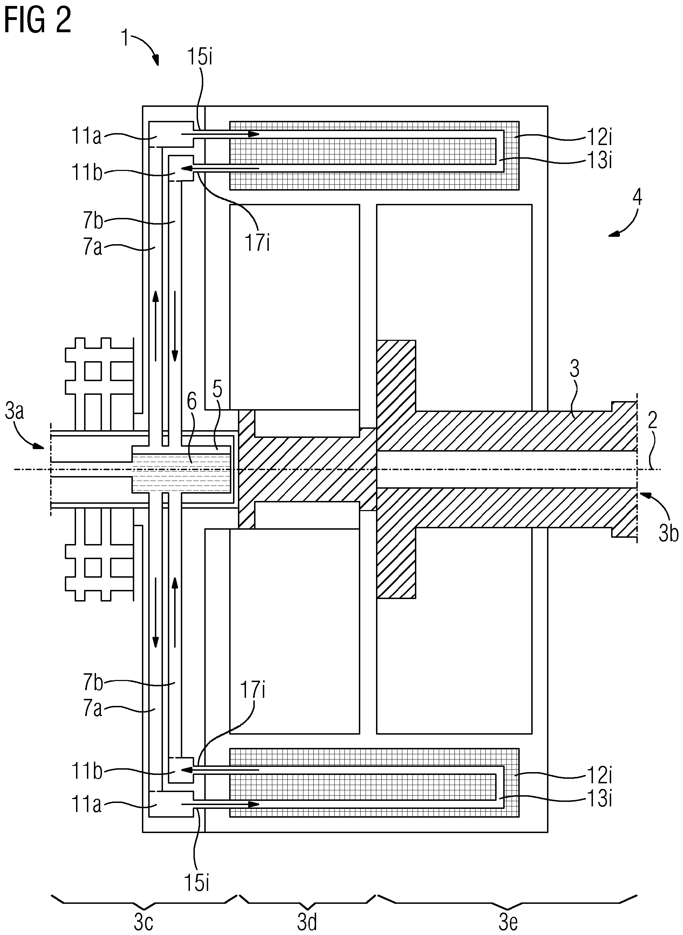

Figur 2 zeigt einen schematischen Längsschnitt eines ähnlichen Rotors 1, der beispielsweise analog zu dem in Figur 1 gezeigten Rotor ausgebildet sein kann. Der Schnitt zeigt den Bereich zweier gegenüberliegender Paare von jeweils einer ersten radialen Kühlmittelleitung 7a und einer zweiten radialen Kühlmittelleitung 7b. Diese beiden Kühlmittelleitungen sind jeweils an die ringförmigen ersten und zweiten Verteilerleitungen 11a und 11b angeschlossen. Im Schnittbild der Figur 2 ist zu erkennen, dass von der ersten ringförmigen Verteilerleitung 11a ein Auslass 15i abzweigt, über den die erste Verteilerleitung 11a fluidisch mit einem Spulenkühlrohr 13i verbunden ist. Dieses Spulenkühlrohr 13i kontaktiert thermisch den Bereich der elektrischen Spule 12i und entwärmt so die Spulenwicklung, um das supraleitende Leitermaterial auf seine Betriebstemperatur zu kühlen. Das Spulenkühlrohr 13i durchsetzt den Bereich der Spule 12i in Form einer Schleife und ist an seinem Ende mit einem Einlass 17i der zweiten Verteilerleitung 11b verbunden. So gelangt das inzwischen erwärmte Kühlmittel 6 zurück in den Kreislauf. Der Rotor des zweiten Ausführungsbeispiels weist solche Auslässe 15i, Spulenkühlrohre 13i und Einlässe 17i nicht nur in der gezeigten Schnittebene auf, sondern in allen azimutalen Positionen, auf denen elektrische Spulen 12i angeordnet sind. Es ist also hier jeder elektrischen Spule 12i ein eigener Auslass 15i, ein eigenes Spulenkühlrohr 13i und ein eigener Einlass 17i zugeordnet. Beispielsweise können wiederum zwischen 20 und 100 solcher elektrischer Spulen, vorzugsweise wenigstens 40 solcher Spulen auf diese Weise parallel gekühlt werden. Hierzu sind nur wenige radiale Kühlmittelleitungen nötig. Die Anzahl der ersten radialen Kühlmittelleitungen 7a sowie der zweiten radialen Kühlmittelleitungen 7b kann dabei jeweils vorteilhaft zwischen zwei und acht liegen.

Wie in den Beispielen der Figur 1 und Figur 2 gezeigt, muss sich der Hohlraum 5 im Inneren der Rotorwelle 2 nicht über die gesamte axiale Länge der Rotorwelle 2 erstrecken. Angrenzend an das erste Wellenende 3a, von dem aus das Kühlmittel 6 eingespeist wird, befindet sich hier zunächst ein hohler Wellenabschnitt 3c, in dem der Hohlraum 5 angeordnet ist. Angrenzend daran liegt ein massiver Wellenabschnitt 3d vor, wodurch eine höhere mechanische Stabilität der Rotorwelle erreicht wird als bei einer durchgehend hohlen Welle. An den Bereich 3d angrenzend findet sich im gezeigten Beispiel ein weiterer hohler Wellenabschnitt 3e, der jedoch nicht für die Zirkulation von Kühlmittel vorgesehen ist, sondern für andere benötigte Funktionalitäten des Rotors genutzt werden kann, beispielsweise für das Verlegen von Hydraulikleitungen.

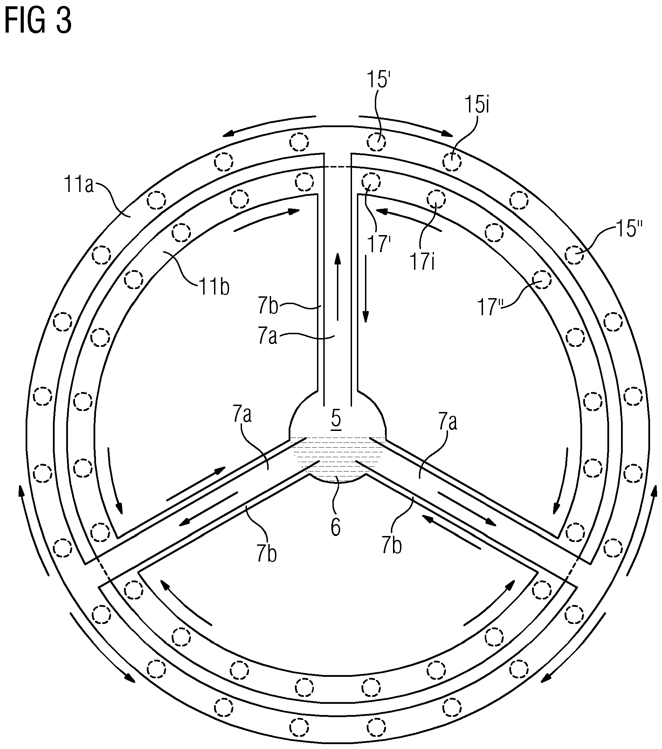

Figur 3 zeigt einen schematischen Querschnitt eines Rotors 1 im Bereich der ringförmigen Verteilerleitungen 11a und 11b nach einem dritten Ausführungsbeispiel der Erfindung. Hierbei ist nur die Topologie der verschiedenen Rohrleitungen wiedergegeben, die übrigen Komponenten des Rotors sind der Übersichtlichkeit halber weggelassen. Die erste Verteilerleitung 11a ist über drei erste radiale Kühlmittelleitungen 7a fluidisch mit dem Hohlraum 5 der Rotorwelle verbunden. Ebenso ist die zweite ringförmige Verteilerleitung 11b über drei zweite radiale Kühlmittelleitungen 7b mit dem Hohlraum 5 verbunden. Dabei ist jeweils eine erste radiale Kühlmittelleitung 7a zusammen mit einer zweiten radialen Kühlmittelleitung 7b zusammen geführt, wobei die zweiten radialen Kühlmittelleitungen 7b die ersten radialen Kühlmittelleitungen 7a jeweils konzentrisch umschließen. Die Flussrichtungen des Kühlmittels sind in der Figur 3 mit Pfeilen angedeutet. Dabei sind die ersten Kühlmittelleitungen 7a jeweils als Zuführungen und die zweiten Kühlmittelleitungen 7b jeweils als Rückleitungen ausgebildet. Das noch verflüssigte kalte Kühlmittel 6 wird also im Inneren der Leitungen 7a transportiert und nach Art des Gegenstromprinzips von dem zurückströmenden Kühlmittel in den zweiten radialen Kühlmittelleitungen 7b umgeben. Hierdurch wird bereits eine thermische Isolation gegen die noch wärmere äußere Umgebung erreicht. Zusätzlich sind alle Rohrleitungen, also sowohl die radialen Kühlmittelleitungen 7a und 7b, die Verteilerleitungen 11a und 11b sowie die daraus abzweigenden Spulenkühlrohre 13i mit weiteren Isolationen umhüllt. Aus Figur 3 ist ersichtlich, dass die beiden ringförmigen Verteilerleitungen 11a und 11b auf unterschiedlichen Radien angeordnet sind. Hierbei ist die als Kühlmittelzuleitung verwendete erste Verteilerleitung 11a weiter außen angeordnet als die für die Rückführung verwendete Verteilerleitung 11b. Jede der beiden Verteilerleitungen 11a und 11b ist über 24 Abzweigungen mit den jeweiligen Spulenkühlrohren verbunden, die zu den einzelnen elektrischen Spulen führen. Diese Abzweigungen sind als Auslässe 15i der ersten Verteilerleitung 11a und als Einlässe 17i der zweiten Verteilerleitung 11b ausgebildet. Im Beispiel der Figur 3 dient jedes der 24 angrenzenden Spulenkühlrohre zur Kühlung einer Gruppe von jeweils zwei elektrischen Spulen, die von dem Kühlmittel eines Spulenkühlrohrs sequentiell durchströmt werden.

Die in Figur 3 gezeigte paarweise Anordnung der ersten und zweiten radialen Kühlmittelleitungen 7a und 7b ist besonders vorteilhaft, um die Anzahl an benötigten speichenartigen radialen Verbindungen möglichst weit zu reduzieren. Eine günstige mechanische Kräfteverteilung bei geringer Anzahl an Rohren ergibt sich bereits bei den gezeigten jeweils drei speichenartig angeordneten Verbindungen. Das Verhältnis der Zahl der Ein- und Auslässe 15i und 17i zur Zahl der radialen Kühlmittelleitungen 7a und 7b beträgt hier also 8:1. Hierbei ergeben sich für die verschiedenen Ein- und Auslässe 15i und 17i unterschiedliche Strömungsverhältnisse. Beispielhaft sind in der Figur 3 ein erster Auslass 15' und ein erster Einlass 17' markiert, die sich beide relativ nahe bei den radialen Kühlmittelleitungen 7a und 7b befinden. Für die elektrischen Spulen auf den entsprechenden azimutalen Positionen ergibt sich daher ein vergleichsweise kurzer gesamter Strömungsweg für das Kühlmittel. Im Unterschied hierzu ist in Figur 3 ein zweiter Auslass mit 15" und ein zweiter Einlass mit 17" markiert, deren azimutale Position deutlich weiter von den radialen Kühlmittelleitungen 7a und 7b entfernt ist. Für die den Abzweigungen 15" und 17" zugeordneten Spulen liegt daher ein insgesamt deutlich längerer Strömungsweg für das Kühlmittel 6 vor. Um die Strömungsverhältnisse für die Kühlung der verschiedenen Spulen auszugleichen und trotzdem eine möglichst gleichmäßige Temperaturverteilung der Betriebstemperaturen zu erreichen, können verschiedene Maßnahmen ergriffen werden. So ist es beispielsweise vorteilhaft, wenn der Rohrquerschnitt der ersten und zweiten Verteilungen 11a und 11b größer ist als der Rohrquerschnitt der jeweils daran angrenzenden Spulenkühlrohre 13i. Allgemein kann das Verhältnis dieser Rohrquerschnitte vorteilhaft bei wenigstens 2:1 liegen. Weiterhin kann auch der Rohrquerschnitt der Verteilerleitungen 11a und 11b über den Umfang der Ringleitungen variieren. So kann der Querschnitt beispielsweise im Bereich der entfernter liegenden Abzweigungen 15" und 17" größer ausgebildet sein als in der Nähe der radialen Kühlmittelleitungen 7a und 7b. Auch der Querschnitt der Abzweigungen kann variieren, um dadurch den Strömungswiderstand anzupassen.

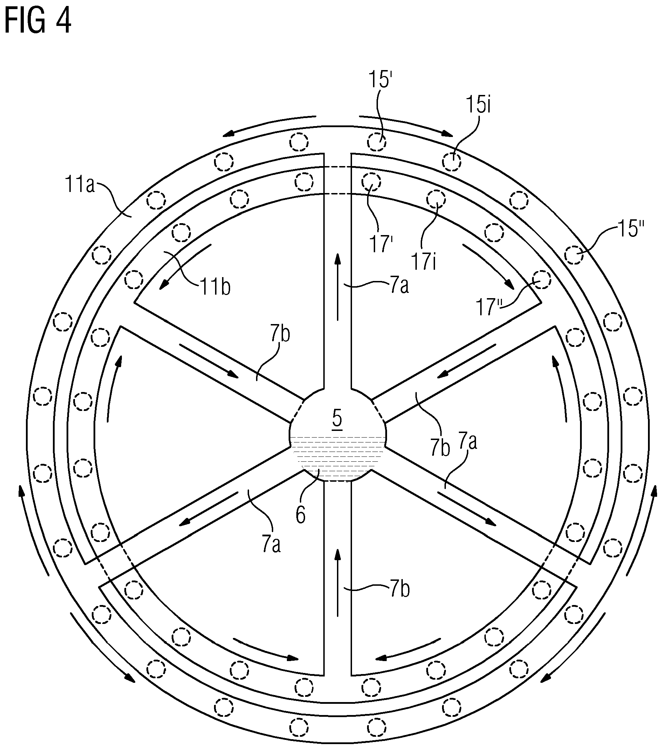

Figur 4 zeigt eine ähnliche schematische Querschnittsdarstellung zweier Verteilerleitungen 11a und 11b nach einem vierten Ausführungsbeispiel der Erfindung. In diesem Ausführungsbeispiel sind wiederum beide Verteilerleitungen 11a und 11b über jeweils drei erste beziehungsweise zweite radiale Kühlmittelleitungen 7a oder 7b an den Hohlraum 5 angeschlossen. Auch hier sind jeweils die ersten radialen Kühlmittelleitungen 7a als Kühlmittelzuführungen und die zweiten radialen Kühlmittelleitungen als Kühlmittelrückführungen ausgebildet, was durch die Pfeile in Figur angedeutet ist. Diese Hin- und Rückleitungen werden jedoch hier nicht paarweise geführt, sondern verteilen sich abwechselnd auf verschiedene Winkelpositionen. Hierdurch werden insgesamt mehr speichenartige Verbindungen benötigt, bei dieser Ausführungsvariante sind jedoch die Strömungsverhältnisse an den verschiedenen azimutalen Positionen der verschiedenen Spulen ähnlicher. Beispielhaft ist auf der ersten Verteilerleitung 11a ein erster Auslass, der sich in der Nähe einer Zuleitung 7a befindet, mit 15' markiert. Das dort abzweigende Spulenkühlrohr mündet an der entsprechenden Winkelposition über den Einlass 17' in die zweite Verteilerleitung 11b. Dieser erste Einlass 17' ist jedoch relativ weit von der nächsten zweiten radialen Kühlmittelleitung 17b entfernt, so dass insgesamt über beide Verteilerleitungen 11a und 11b zusammen ein ganzes Winkelsegment von 60° durchströmt werden muss. Zum Vergleich ist in Figur 4 ein zweiter Auslass 15" sowie ein zweiter Einlass 17" markiert, welche sich beide in der Nähe einer zweiten radialen Kühlmittelleitung 7b befinden. An dieser Winkelposition ist also die Anbindung an die Kühlmittelzuführung 7a länger, aber die Anbindung an die Kühlmittelrückführung 7b entsprechend kürzer. Insgesamt ergeben sich für die verschiedenen azimutalen Positionen der Abzweigungen 15i und 17i im Wesentlichen angeglichene Strömungswege, was die Ausbildung einer gleichmäßigen Temperaturverteilung über die verschiedenen Spulen 12i erleichtert.

## Patentansprüche

1. Rotor (1) einer elektrischen Maschine mit einer Kühlvorrichtung zur Kühlung des um eine Rotationsachse (2) drehbar gelagerten Rotors (1)
wobei der Rotor (1) von einer zentralen Rotorwelle (3) getragen wird und einen Hohlraum (5) im Inneren der Rotorwelle (3) zur Aufnahme von Kühlmittel (6) umfasst,
wobei die Kühlvorrichtung einen geschlossenen Kühlkreislaufaufweist mit:
- wenigstens einer sich von dem Hohlraum (5) radial nach außen erstreckenden ersten Kühlmittelleitung (7a),
- einer über die erste Kühlmittelleitung (7a) mit dem Hohlraum (5) fluidisch verbundenen ringförmigen ersten Verteilerleitung (11a),
- wenigstens einer sich von dem Hohlraum (5) radial nach außen erstreckenden zweiten Kühlmittelleitung (7b),
- und einer über die zweite Kühlmittelleitung (7b) mit dem Hohlraum (5) fluidisch verbundenen ringförmigen zweiten Verteilerleitung (11b),
wobei der Rotor eine Mehrzahl elektrischer Spulen (12i) auf verschiedenen azimutalen Positionen aufweist,
wobei jede Spule (12i) thermisch mit einem Spulenkühlrohr (13i) gekoppelt ist, welches jeweils über einen Auslass (15i) mit der ersten ringförmigen Verteilerleitung (11a) und jeweils über einen Einlass (17i) mit der zweiten ringförmigen Verteilerleitung (11b) fluidisch verbunden ist,
wobei die erste (11a) und die zweite (11b) ringförmige Verteilerleitung mit voneinander unterschiedlichen radialen Abständen jeweils konzentrisch um die Rotationsachse (2) angeordnet sind.

2. Rotor (1) nach Anspruch 1, bei dem die ringförmige erste Verteilerleitung (11a) als geschlossene Ringleitung konzentrisch um die Rotationsachse (2) angeordnet ist.

3. Rotor (1) nach Anspruch 1 oder 2, bei dem der Rohrquerschnitt der ersten Verteilerleitung (11a) größer ist als der Rohrquerschnitt der einzelnen Spulenkühlrohre (13i).

4. Rotor (1) nach Anspruch 3, bei dem jede Spule (12i) mit einem separaten Spulenkühlrohr (13i) mit der ersten ringförmigen Verteilerleitung (11a) verbunden ist.

5. Rotor (1) nach Anspruch 4, bei dem die einzelnen Spulen (12i) zu Kühlgruppen zusammengefasst sind, wobei die Spulen (12i) jeder Kühlgruppe mit einem gemeinsamen Spulenkühlrohr (13i) thermisch gekoppelt sind.

6. Rotor nach einem der vorhergehenden Ansprüche, bei dem die Kühlvorrichtung
- eine Mehrzahl von ersten radialen Kühlmittelleitungen (7a) zwischen Hohlraum (5) und erster Verteilerleitung (11a) sowie
- eine Mehrzahl von zweiten radialen Kühlmittelleitungen (7b) zwischen Hohlraum (5) und zweiter Verteilerleitung (11b) aufweist.

7. Rotor (1) nach Anspruch 6, bei dem die ersten und/oder zweiten radialen Kühlmittelleitungen (7a, 7b) jeweils azimutal gleichmäßig verteilt angeordnet sind.

8. Rotor (1) nach einem der Ansprüche 6 oder 7, der eine gleiche Anzahl von ersten (7a) und zweiten (7b) radialen Kühlmittelleitungen aufweist, wobei in azimutaler Richtung jeweils erste (7a) und zweite (7b) radiale Kühlmittelleitungen abwechselnd um die Rotationsachse angeordnet sind.

9. Rotor (1) nach einem der Ansprüche 6 oder 7, der eine gleiche Anzahl von ersten (7a) und zweiten (7b) radialen Kühlmittelleitungen aufweist, wobei jeweils eine erste (7a) und eine zweite (7b) radiale Kühlmittelleitung paarweise parallel zueinander geführt werden.

10. Rotor (1) nach einem der vorhergehenden Ansprüche, soweit sie von Anspruch 3 abhängen, bei dem die Anzahl der Spulen (12i) wenigstens doppelt so groß ist wie die Anzahl der ersten radialen Kühlmittelleitungen (7a).

11. Elektrische Maschine mit einem Rotor (1) nach einem der vorhergehenden Ansprüche.

## Claims

1. Rotor (1) of an electric machine having a cooling device for cooling the rotor which is mounted so as to be rotatable about a rotation axis (2), wherein the rotor (1) is supported by a central rotor shaft (3) and comprises a cavity (5) in the interior of the rotor shaft (3) for receiving coolant (6), wherein the cooling device has a closed coolant circuit having:
- at least one first coolant line (7a) extending radially outward from the cavity (5);
- an annular first distribution line (11a) fluidically connected to the cavity (5) via the first coolant line (7a);
- at least one second coolant line (7b) extending radially outward from the cavity (5); and
- an annular second distribution line (11b) fluidically connected to the cavity (5) via the second coolant line (7b);
wherein the rotor has a plurality of electric coils (12i) at different azimuthal positions;
wherein each coil (12i) is thermally coupled to a coil cooling pipe (13i) which is in each case fluidically connected to the first annular distribution line (11a) via an outlet (15i), and via an inlet (17i) is in each case fluidically connected to the second annular distribution line (11b);
wherein the first (11a) and the second (11b) annular distribution lines are in each case disposed concentrically and at mutually different radial spacings about the rotation axis (2) .

2. Rotor (1) according to Claim 1, in which the annular first distribution line (11a), as a closed loop line, is disposed concentrically about the rotation axis (2).

3. Rotor (1) according to Claim 1 or 2, in which the pipe cross section of the first distribution line (11a) is greater than the pipe cross section of the individual coil cooling pipes (13i).

4. Rotor (1) according to Claim 3, in which each coil (12i) is connected via a separate coil cooling pipe (13i) to the first annular distribution line (11a).

5. Rotor (1) according to Claim 4, in which the individual coils (12i) are combined to form cooling groups, wherein the coils (12i) of each cooling group are thermally coupled to one shared coil cooling pipe (13i).

6. Rotor according to one of the preceding claims, in which the cooling device has
- a plurality of first radial coolant lines (7a) between the cavity (5) and the first distribution line (11a); as well as
- a plurality of second radial coolant lines (7b) between the cavity (5) and the second distribution line (11b).

7. Rotor (1) according to Claim 6, in which the first and/or the second radial coolant lines (7a, 7b) are in each case azimuthally uniformly distributed.

8. Rotor (1) according to one of Claims 6 or 7, said rotor (1) having an equal number of first (7a) and second (7b) radial coolant lines, wherein first (7a) and second (7b) radial coolant lines are situated in alternation about the rotational axis in the azimuthal direction.

9. Rotor (1) according to one of Claims 6 or 7, said rotor (1) having an equal number of first (7a) and second (7b) radial coolant lines, wherein first (7a) and second (7b) radial coolant lines are routed in pairs in parallel with respect to one other.

10. Rotor (1) according to one of the preceding claims, provided they are dependent on claim 3, in which rotor (1) the number of coils (12i) is at least twice the number of first radial coolant lines (7a).

11. Electric machine having a rotor (1) according to one of the preceding claims.

## Revendications

1. Rotor (1) d'une machine électrique ayant un système de refroidissement pour le refroidissement du rotor (1) monté tournant autour d'un axe (2) de rotation,
dans lequel le rotor (1) est porté par un arbre (3) rotorique central et comprend une cavité (5) à l'intérieur de l'arbre (3) rotorique de réception de fluide (6) réfrigérant,
dans lequel
le système de refroidissement a un circuit de refroidissement fermé comprenant :
- au moins un premier conduit (7a) pour du fluide réfrigérant s'étendant de la cavité (5) radialement vers l'extérieur,
- un premier conduit (11a) annulaire répartiteur communiquant fluidiquement avec la cavité (5) par le premier conduit (7a) pour du fluide réfrigérant,
- au moins un deuxième conduit (7b) pour du fluide réfrigérant s'étendant de la cavité (5) radialement vers l'extérieur,
- et un deuxième conduit (11b) annulaire répartiteur communiquant fluidiquement avec la cavité (5) par le deuxième conduit (7b) pour du fluide réfrigérant,
dans lequel le rotor a une pluralité de bobines (12i) électriques en des positions azimutales différentes,
dans lequel chaque bobine (12i) est couplée thermiquement à un tube (13i) commun de refroidissement de bobine, qui communique fluidiquement respectivement par une sortie (15i) avec le premier conduit (11a) annulaire répartiteur et respectivement par une entrée (17i) avec le deuxième conduit (11b) annulaire répartiteur,
dans lequel le premier (11a) et le deuxième (11b) conduit annulaire répartiteur sont disposés respectivement concentriquement autour de l'axe (2) de rotation à des distances radiales différentes l'une de l'autre.

2. Rotor (1) suivant la revendication 1, dans lequel le premier conduit (11a) annulaire répartiteur est disposé sous la forme d'un conduit annulaire fermé concentriquement autour de l'axe (2) de rotation.

3. Rotor (1) suivant la revendication 1 ou 2, dans lequel la section transversale de tuyau du premier conduit (11a) répartiteur est plus grande que la section transversale de tuyau des divers tuyaux (13i) de refroidissement de bobine.

4. Rotor (1) suivant la revendication 3, dans lequel chaque bobine (12i) est reliée au premier conduit (11a) annulaire répartiteur par un tuyau (13i) distinct de refroidissement de bobine.

5. Rotor (1) suivant la revendication 4, dans lequel les diverses bobines (12i) sont rassemblées en groupes de refroidissement, les bobines (12i) de chaque groupe de refroidissement étant couplées thermiquement à un tube (13i) commun de refroidissement de bobine.

6. Rotor suivant l'une des revendications précédentes, dans lequel le système de refroidissement a
- une pluralité de premier conduits (7a) radiaux pour du fluide réfrigérant entre la cavité (5) et le premier conduit (11a) répartiteur ainsi que
- une pluralité de deuxième conduits (7b) radiaux pour du fluide réfrigérant entre la cavité (5) et le deuxième conduit (11b) répartiteur.

7. Rotor (1) suivant la revendication 6, dans lequel les premier et/ou les deuxième conduits (7a, 7b) radiaux pour du fluide réfrigérant sont disposés respectivement d'une manière répartie uniformément en azimut.

8. Rotor (1) suivant l'une des revendications 6 ou 7, qui a un même nombre de premiers (7a) et de deuxièmes (7b) conduits radiaux pour du fluide réfrigérant, dans lequel, dans la direction azimutale, respectivement des premiers (7a) et des deuxièmes (7b) conduits radiaux pour du fluide réfrigérant sont disposés en alternance autour de l'axe de rotation.

9. Rotor (1) suivant l'une des revendications 6 ou 7, qui a un même nombre de premiers (7a) et de deuxièmes (7b) conduits radiaux pour du fluide réfrigérant, dans lequel respectivement un premier (7a) et un deuxième (7b) conduit radial pour du fluide réfrigérant sont par paire parallèles entre eux.

10. Rotor (1) suivant l'une des revendications précédentes, dans la mesure où elles dépendent de la revendication 3, dans lequel le nombre des bobines (12i) est au moins deux fois plus grand que le nombre des premiers conduits (7a) pour du fluide réfrigérant.

11. Machine électrique ayant un rotor (1) suivant l'une des revendications précédentes.
